# EUROPEAN PATENT SPECIFICATION

(11) **EP 0 832 675 B1**
(45) Date of publication and mention of the grant of the patent: **12.12.2001**
(21) Application number: 97830461.6
(22) Date of filing: 22.09.1997
(51) Int. Cl.: B01D 29/39, B01D 33/21, F16L 27/08

(54) **Filter of the type with disks set in a swivelling coaxial case**
Filter mit in einem schwenkbaren Gehäuse angeordneten Filterscheiben
Filtre avec des disques filtrants arrangés dans un carter pivotable

(30) Priority: 30.09.1996 IT RM960664
(43) Date of publication of application: 01.04.1998
(73) Proprietor: Meccanica Spadoni s.r.l., 05019 Orvieto (TR) (IT)
(72) Inventor: Spadoni, Sergio, 05019 Orvieto (CH) (IT); Spadoni, Patrizio, 05019 Orvieto (CH) (IT)
(74) Representative: Lanzoni, Luciano

(56) References cited:
- DE-A- 1 926 162
- DE-A- 3 240 102
- FR-A- 2 633 193
- US-A- 4 478 435

## Description

The present invention relates to a filter for clarifying liquids, in particular a filter for enological use or in any case for treating liquids destined for human consumption, of the type with horizontal filtering disks or plates set in a coaxial cylindrical case. The complex of disks and case is mounted so that it can rotate with respect to its support structure so that the longitudinal axis of said complex can swivel between a vertical position, i.e. the working attitude for the filter, and a horizontal position, i.e. an attitude useful for emptying and cleaning the filter.

Several embodiments of the filter according to the type indicated above are known in the prior art. They share the problem of the periodic opening of the tank to remove the exhausted diatomite or other filtering aid, and to clean out residual sludge from the filtering disks and from the base cover of the case.

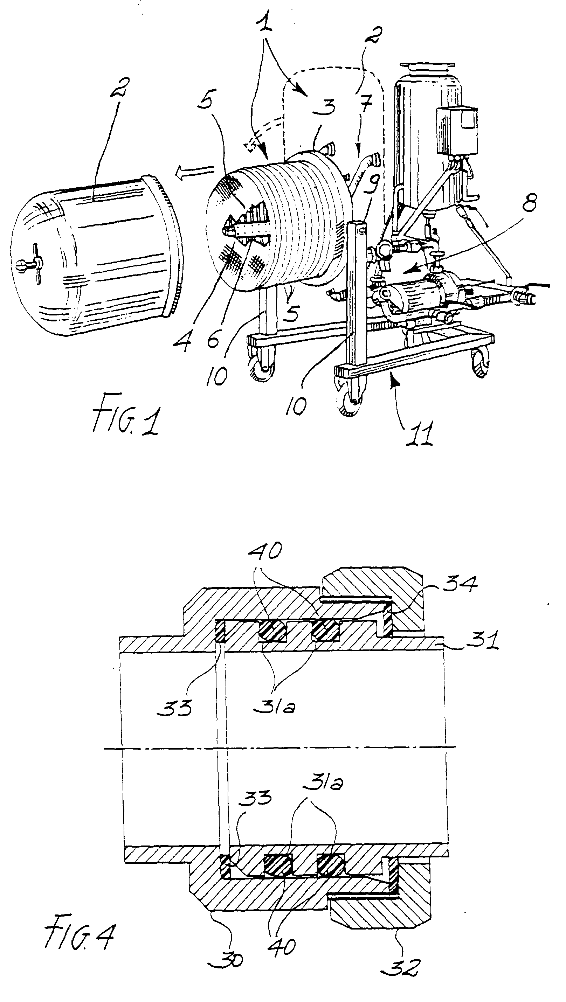

Such filters have a structure of the type shown in enclosed Figure 1, comprising an essentially cylindrical case 1 constituted by a bell 2 sealed at its bottom by a base cover 3. Centrally to cover 3 is integral a vertical hollow duct 4 providing axial support to the filtering disks 5 and collecting and conveying within it, through holes 6, the liquid filtered by them. On the outer surface of the base cover 3 are provided means 7 for connecting the case 1 with the external ducts for the inflow of the liquid to be filtered and the outflow of the filtered liquid, indicated in their entirety by 8 in Figure 1. The case 1 can swivel at least from a working attitude to an emptying and cleaning attitude around a horizontal axis of rotation passing through a pair of pivots 9, which, on one side, are integrally associated to said base cover 3 and, on the other, are rotationally engaged in risers 10 of the filter support structure 11.

It is evident that, in order to swivel the case 1, it is necessary first to loosen and detach all means 7, integral with cover 3, from the connected external ducts 8 meant to be rigid and fixed within the structure of the filter.

Some prior art solutions provide for means 7 to be shaped in such a way as to be inserted and removed from a fixed end head of the external ducts 8, in a sort of male/female connection. Such solutions, even when they lack means for locking and tightening the connection, present problems pertaining to the sealing elements under the flow pressures of the liquids and to their deterioration due essentially to the fact that the male/female connection does not take place axially but rather according to the curve of rotation of the cover 3 which integrally carries the means 7. Moreover, such solutions still entail opening and closing interventions, however minimal, at least for checking the connection and its functional stability over time.

Document FR-A-2 633 193 discloses a filter according to the preamble of claim 1. According to this document, the same Applicant resolved the problem of letting the case rotate without proceeding with loosening and detaching all external ducts, by constructing the horizontal axis of rotation of the case with a tubular element, positioned parallel, integral at the bottom, to the base cover, closed at the respective ends, wherein it is rotationally constrained to a support structure. Said tubular element is internally in communication, through the base cover, with said vertical hollow duct supporting the filtering disks and it presents on the surface, in proximity to the end, respective openings providing communication with fixed pipes for the inflow of the liquid to be filtered and for the outflow of the filtered liquid by means of junction elements in the form of sealed hoses on said tubular elements.

Although this solution has proved able to allow for the rotation of the filter case without having to proceed with loosening and detaching all external ducts, or in any case with other external interventions, nonetheless it is understood that the liquids which flow in the external outflow and inflow ducts follow non smoothly curved paths, due to passages through slots.

A first drawback of the aforementioned solution is represented by the head losses of the pipes, which prolong filtration times and increase the power required to keep the liquids flowing.

Another drawback is represented by the fact that the presence of corners and interstices in the ducts, in the tubular element and in the vertical hollow duct provides fertile ground for bacteria to nestle, which forces to conduct more frequent and accurate sanitisation and sterilisation interventions.

An additional drawback is constituted by the heavy structural complexity, which, though providing stability and reliability over time, entails a high number of component parts which, in the final analysis, influence the final cost.

The object of the present invention therefore is to eliminate the drawbacks just mentioned, accomplishing a connection set-up between the vertical hollow duct of the filter and the external inflow and outflow ducts, able to allow for the rotation of the filter case without proceeding to loosen and/or detach all the external ducts, without opening them and thus without external interventions, but which, at the same time, allows for a flow with smoothly curved paths, and without turbulence-inducing passages through slots. Such a connection set-up should be, insofar as possible, free of corners and interstices in the ducts, in the tubular elements and in the vertical hollow duct which, as stated previously, constitute fertile ground for bacteria easily to nestle. The subject set-up should also comprise a limited number of simple and inexpensive parts.

The invention, as it is characterised in claim 1 solves the problem of providing a roughing and polishing filter for enological use and in general for liquids destined for human consumption, of the type with horizontal disks set in a swivelling coaxial case.

According to a preferred embodiment between said bend and said rotating coupling a straight section and a tap are interposed.

Additional characteristics and advantages of the present invention shall be made more evident in the detailed description that follows, of a preferred embodiment shown purely by way of non limiting example in the enclosed drawings, in which:
- Figure 1 shows in perspective view, as described previously, a prior art filter with swivelling case, with some parts shown in dashed lines or exploded to highlight the structure.
- Figure 2 shows in partial front view the base cover, partially rotated, of the filter with the related ducts.
- Figure 3 shows as in Figure 2, in a different partial view, the base cover of the filter with the related ducts.
- Figure 4 shows in longitudinal section a rotating coupling used in the filter according to the invention.

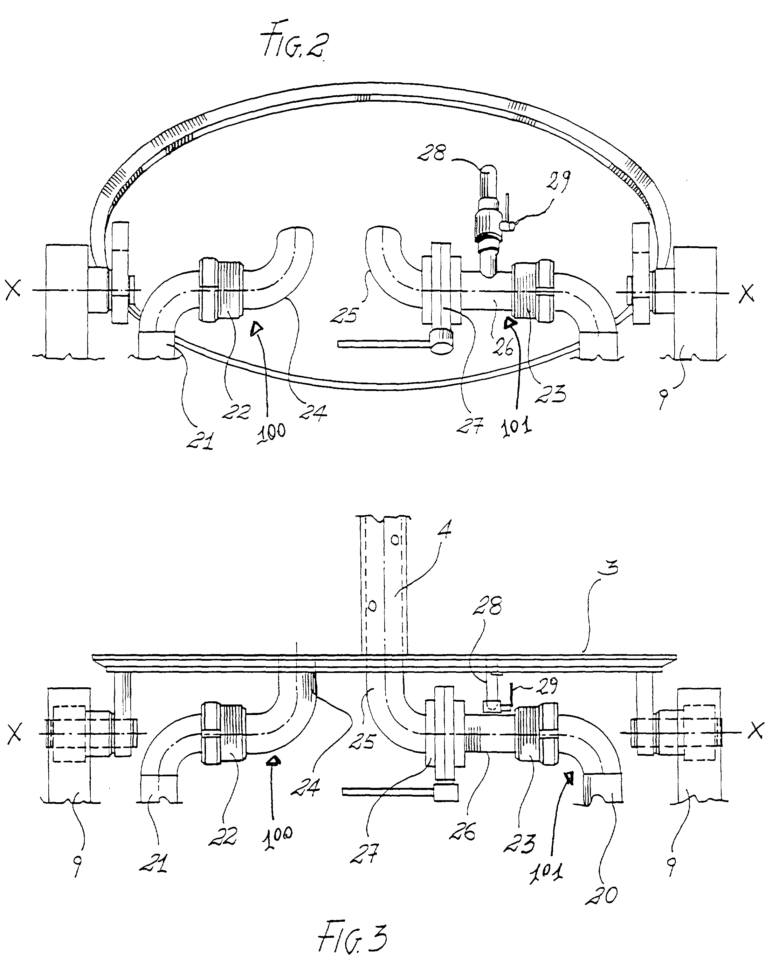

In accordance with the present invention, Figures 2 and 3 show a base cover 3 as belonging to a previously described filter shown in Figure 1. The base cover 3 is hinged to the pair of risers 10 of the support structure 11, by means of the pair of pivots 9, so as to be able to rotate around an axis X-X of rotation coinciding with that of the pivots 9.

According to the invention, the means 7 for the connection and communication of the case 1 with the external ducts 8 for the inflow of the liquid to be filtered and for the outflow of the filtered liquid (Figure 1) comprise respective 90° bends 24, 25. The external ducts 8 for the inflow of the liquid to be filtered and for the outflow of the filtered liquid similarly comprise respective 90° bends 21, 20.

A first rotating coupling 22 connects, coaxially to the horizontal axis X-X of rotation, a 90° bend 21 of the duct for the inflow of the liquid to be filtered to a 90° bend 24 of the connecting means 7. A second rotating coupling 23 connects, coaxially to said horizontal axis X-X of rotation, a 90° bend 20 of the duct for the outflow of the filtered liquid with a 90° bend 25. The bend 25 is joined to the vertical hollow duct 4 supporting the filtering disks, as described previously. Between the bend 25 and the rotating coupling 23 are conveniently interposed a tap 27 and a straight section 26 provided with a branch 28 and related valve 29 communicating with the interior of the case 1, whose functions for the filtration of the residue are known and are thus not further described herein. If residue filtration is performed through means external to the filtering bell, said tap 27, branch 28 and valve 29 can be omitted.

The rotating couplings may be of any type known in the prior art, able to allow for the related rotation, with hermetic seal, of two pipes joined by the coupling. A particularly simple, but effective, preferred embodiment is anyway described herein.

Each rotating coupling 22, 23 comprises a cup 30, a straight connector 31 and a ring nut 32. The cup 30 is threaded externally in its largest diameter portion. The straight connector 31, provided with outer circumferential seats 3 la for seal rings 40, is inserted into the cup 30, whilst the ring nut 32, inserted in a coaxially sliding manner onto the straight connector 31, is threaded internally to screw onto the external threaded portion of the cup 30. A first wear preventing ring 33 is positioned at the bottom of the cup 30, so as to create a front seal between the cup 30 and the straight connector 31, whilst a second wear preventing ring 34 is positioned on the straight connector 31, between the cup 30 and the bottom of the ring nut 32 for a similar seal.

Therefore, thanks to the relative rotation of the bends 21, 24 and 20, 25 around the horizontal axis of rotation X-X it is possible to rotate the base cover 3, and thus the entire case 1 of the filter from a vertical axis to a horizontal axis and vice versa.

What has been described clearly shows the attainment of the proposed goals and, in particular, the obtainment of a path for the fluids able to prevent cavitation or turbulence therein, as well as a regularity and uniformity in the passage sections able to favour and simplify periodic sanitisation and sterilisation operations.

## Claims

1. Roughing and polishing filter for enological use and in general for liquids destined for human consumption, of the type having a case (1) being able to rotate, at least from a filtering attitude with the longitudinal case axis positioned vertically to an emptying and cleaning attitude with the longitudinal axis positioned horizontally, around a horizontal axis of rotation (X-X) passing through a pair of pivots (9), which lie in a plane below the base cover (3) and are rotationally engaged in risers (10) of a structure (11) supporting the filter, the case (1) comprising a bell (2) sealed at its bottom by a base cover (3), the base cover having centrally and perpendicularly thereto an integral hollow duct (4) supporting a plurality of filtering disks (5) coaxially positioned within the case and parallel to the base cover (3), the hollow duct (4) also serving for collecting and conveying the liquid filtered by the filtering disks , the outer surface of said base cover (3) carrying means (7) for the connection and communication of said case (1) with outer ducts (8) for the inflow of the liquid to be filtered and the outflow of the filtered liquid
- said connection and communication means (7) and said outer duct (8) defining a duct (100) for the inflow of the liquid to be filtered and a duct (101) for the outflow of the filtered liquid both said ducts (100, 101) comprise respectively a first and a second 90° bend (21, 24, 25, 20), **characterised in that** the first and second 90° bends are smoothly curved;
- a first rotating coupling (22) separate from the pivot (9) and coaxial to said horizontal axis of rotation (X-X), connects the first 90° bend (21) of the duct (100) for inflow of the liquid to be filtered to the second 90° bend (24) of said inflow duct (100); and
- a second rotating coupling (23) separate from the pivot (9) and coaxial to said horizontal axis of rotation (X-X), connects the first 90° bend (20) of the duct (101) for the outflow of the filtered liquid to the second 90° bend (25) of said outflow duct (101).

2. Filter according to claim 1, **characterised in that** between the second bend (25) of the outflow duct and the second rotating coupling (23) are interposed a tap (27) and a straight section (26) provided with a branch (28) and related valve (29) communicating with the interior of the case (1).

3. Filter according to claim 1, **characterised in that** said first and second rotating coupling (22, 23) comprise an externally threaded cup (30) with an open bottom, a straight connector (31) provided with outer circumferential seats (31a) for seal rings (40) inserted into said cup (30), and a coaxially inserted ring nut (32) sliding on said straight connector (31), threaded internally to screw onto said cup (30); a first wear preventing ring (33) being positioned at the open bottom of said cup (30) between the latter and said straight connector (31), and a second wear preventig ring (34) being positioned, on said straight connector (31), between said cup (30) and the bottom of said ring nut (32).

## Patentansprüche

1. Klärungs- und Aufbereitungsfilter für Weinbauzwecke, im allgemeinen für Flüssigkeiten zum menschlichen Verzehr, der Art mit innerhalb eines schwenkbaren Koaxialbehälters (1) angeordneten Scheiben, mit einer Glocke (2), die an deren Boden durch eine Grundkappe (3) abgedichtet ist, wobei mittig dazu eine Vertikalhohlleitung (4) einteilig gelagert ist, welche die Filtrierscheiben (5) axial unterstützt und die von diesen gefilterte Flüssigkeit versammelt und fördert, wobei an der Außenoberfläche der Grundkappe (3) einteilige Mittel (7) zum Anschluß bzw. zur Verbindung des Behälters (1) mit Außenleitungen (8) vorgesehen sind, die zum Zufluß der zu filtrierenden bzw. zum Ausfluß der gefilterten Flüssigkeit dienen, wobei der Behälter (1) mindestens von einer Arbeitslage mit vertikal stehender Längsachse in eine Entleerungs- und Reinigunslage mit horizontal liegender Längsachse um eine horizontal gelagerte Drehachse (X-X) schwenkbar ist, die ein Paar Scharniere (9) durchdringt, welche einerseits mit der Grundklappe (3) einteilig verbunden und andererseits an Ständern (10) eines den Filter tragenden Gestells (11) schwenkbar gelagert sind, **dadurch gekennzeichnet, daß**
- sowohl die o.e. Anschluß- bzw. Verbindungsmittel (7) als auch die o.e. Außenleitungen (8) zum Zufluß der zu filtrierenden bzw. zum Ausfluß der gefilterten Flüssigkeit ein Paar 90°-Muffenkrümmer (24, 25; 21, 20) umfassen;
- ein erstes drehbares Anschlußstück (22) einen 90°-Muffenkrümmer (21) der Leitung zum Zufluß der zu filtrierenden Flüssigkeit mit einem 90°-Muffenkrümmer (24) der o.e. Anschlußmittel (7) koaxial zur horizontal gelagerten Drehachse (X-X) verbindet; und
- ein zweites drehbares Anschlußstück (23) einen 90°-Muffenkrümmer (20) der Leitung zum Ausfluß der gefilterten Flüssigkeit mit einem über die genannten Mittel (7) mit der o.e. Vertikalhohlleitung (4) verbundenen 90°-Muffenkrümmer (25) koaxial zur horizontal gelagerten Drehachse (X-X) verbindet.

2. Filter nach Anspruch 1, **dadurch gekennzeichnet, daß** zwischen dem Muffenkrümmer (25) und dem zweiten drehbaren Anschlußstück (23) ein Zapfen (27) und ein geradliniger Abschnitt (26) mit einem Abzweig (28) sowie dem dazugehörigem mit der Innenseite des Behälters (1) verbundenen Ventil (29) angeordnet sind.

3. Filter nach Anspruch 1, **dadurch gekennzeichnet, daß** die o.e. ersten und zweiten drehbaren Anschlußstücke (22, 23) einen mit Außengewinde versehenen Becher (30), einen geradlinigen mit äußeren in den Becher (30) eingeschnittenen Umfangsaufnahmen (31a) für Dichtungsringe (40) versehenen Anschluß (31), sowie einen koaxial angeordneten Gewindering (32) umfassen, welcher längs des geradlinigen Anschlusses (31) verschiebbar und mit einer Innengewinde zum Verschrauben mit dem Becher (30) versehen ist, wobei ein erster verschleißfester Ring (33) am Boden des Bechers (30) zwischen diesem und dem geradlinigen Anschluß (31) und ein zweiter verschleißfester Ring (34) am geradlinigen Anschluß (31) zwischen dem Becher (30) und dem Boden des o.e. Gewinderings (32) angeordnet sind.

## Revendications

1. Filtre d'ébauchage et de raffinage pour emploi écologique et en général pour liquides destinés à l'usage humain, du type ayant des disques horizontaux placés dans un logement coaxial oscillant (1), qui comprend une cloche (2) fermée hermétiquement sur le fond par une couverture de base (3) dont le centre est solidaire avec une conduite creuse verticale (4) qui supporte axialement les disques filtrants (5) et reçoit et transporte le liquide filtré par lesdits disques, la surface extérieure de ladite couverture de base (3) étant solidaire avec des moyens (7) pour la connexion et la communication dudit logement (1) avec des conduites extérieures (8) pour l'afflux du liquide à filtrer et l'écoulement du liquide filtré, ledit logement (1) étant à même de tourner au moins d'une position de travail avec l'axe longitudinal placé verticalement à une position de vidage et de nettoyage avec ledit axe longitudinal placé horizontalement autour d'une axe horizontal de rotation (X-X) passant à travers un pair de pivots (9), qui d'une part sont associés solidairement à ladite couverture de base (3) et de l'autre sont insérés de façon tournante dans les montants (10) d'une structure (11) qui supporte le filtre, **caractérisé en ce que**:
- lesdits moyens de connexion et de communication (7) et lesdites conduites extérieures (8) pour l'afflux du liquide à filtrer et l'écoulement du liquide filtré comprennent un pair de coudes à 90° (24, 25; 21, 20);
- un premier joint tournant (22) connecte, coaxialement par rapport audit axe horizontal de rotation (X-X), un coude à 90° (21) de la conduite pour l'afflux du liquide à filtrer avec un coude à 90° (24) desdits moyens de connexion (7);
et
- un deuxième joint tournant (23) connecte, coaxialement par rapport audit axe horizontal de rotation (X-X), un coude à 90° (20) de la conduite pour l'écoulement du liquide filtré avec un coude à 90° (25) couplé à ladite conduite creuse verticale (4) par lesdits moyens (7).

2. Filtre selon la revendication 1, **caractérisé en ce que** un robinet (27) et une section droite (26), pourvus d'un raccord (28) et de la soupape correspondante (29) qui communiquent avec l'intérieur du logement (1), sont placés entre le coude (25) et le deuxième joint tournant (23).

3. Filtre selon la revendication 1, **caractérisé en ce que** ledit premier et deuxième joint tournant (22, 23) comprennent une coupe filetée extérieurement (30), un connecteur droit (31) pourvu de sièges périphériques extérieurs (31a) pour loger des bagues d'étanchéité (40) introduites dans ladite coupe (30), et un écrou annulaire (32) inséré coaxialement, qui glisse sur ledit connecteur droit (31) et est pourvu de filetage intérieur pour être vissé sur ladite coupe (30); une première bague anti-usure (33) étant positionnée au fond de ladite coupe (30) entre la dernière et ledit connecteur droit (31), et une deuxième bague anti-usure (34) étant positionnée sur ledit connecteur droit (31) entre ladite coupe (30) et le fond dudit écrou annulaire (32).
